# EUROPEAN PATENT APPLICATION

(11) **EP 1 039 787 A2**
(43) Date of publication of application: **27.09.2000**
(21) Application number: 00300177.3
(22) Date of filing: 11.01.2000
(51) Int. Cl.: H05F 3/02

(54) **A static-eliminating wiper**

(30) Priority: 24.03.1999 CN 99201565
(71) Applicant: Taiwan Bor Ying Corporation, Panchiao City, Taipei Hsien 220 (TW)
(72) Inventor: Lu, Shih-Huang, Taipei Hsien 238 (TW)
(74) Representative: Carter, Stephen John

(57) **Abstract**

A static-eliminating wiper mainly including a conductive main body having a metal clip and a conductive brush connected to a front end thereof. A user may hold the wiper at the main body to bring the conductive brush into contact with an article to be cleaned, such as a lens or a computer screen, so that static electricity on the article being cleaned is grounded and eliminated via the conductive brush, the metal clip, the main body, and the user's body. The metal clip allows the wiper to be conveniently carried by clipping the wiper on a pocket on the user's clothing. A rubber seat having a beveled free end is connected to a rear end of the main body. A cleaning element is adhesively attached to the beveled end surface of the rubber seat to facilitate cleaning of corners on the lens or computer screen being cleaned.

## Description

The present invention relates to a static-eliminating wiper that may effectively eliminate static electricity from lenses of general optical products and computer and television screens.

Lenses of general optical products, such as cameras, telescopes and video cameras, and screens of computers and televisions frequently have dust attached thereto due to existence of static electricity on such lenses and screens. Dust deposited on lenses and screens could not be easily removed and would therefore adversely affect the performance of these lenses and screens. It is therefore necessary to eliminate static electricity from the optical lenses and screens to minimize possible dust deposition on such lenses and screens.

A preferred object of the present invention is to provide a static-eliminating wiper that has simple structure while it effectively eliminates static electricity from articles being cleaned.

In a preferred form the invention provides a static-eliminating wiper mainly including a conductive main body having a metal clip and a conductive brush connected to a front end thereof. A user may hold the wiper at the main body to bring the conductive brush into contact with an article to be cleaned, such as a lens or a computer screen, so that static electricity on the article being cleaned is grounded and eliminated via the conductive brush, the metal clip, the main body, and the user's body. The metal clip allows the wiper to be conveniently carried by clipping the wiper on a pocket on the user's clothing.

The static-eliminating wiper of the present invention preferably has a rubber seat having a beveled free end connected to a rear end of the main body. A cleaning element is adhesively attached to the beveled end surface of the rubber seat to facilitate cleaning of corners on the lens or computer screen being cleaned.

The structure, features, and functions of the present invention may be best understood by referring to the following detailed description of the preferred embodiments and the accompanying drawings, wherein
Fig. 1 is an exploded perspective of a static-eliminating wiper according to the present invention; and
Fig. 2 is a sectional view of the static-eliminating wiper of Fig. 1 in an assembled state.

### DETAILED DESCRIPTION OF THE PREFERRED EMBODIMENTS

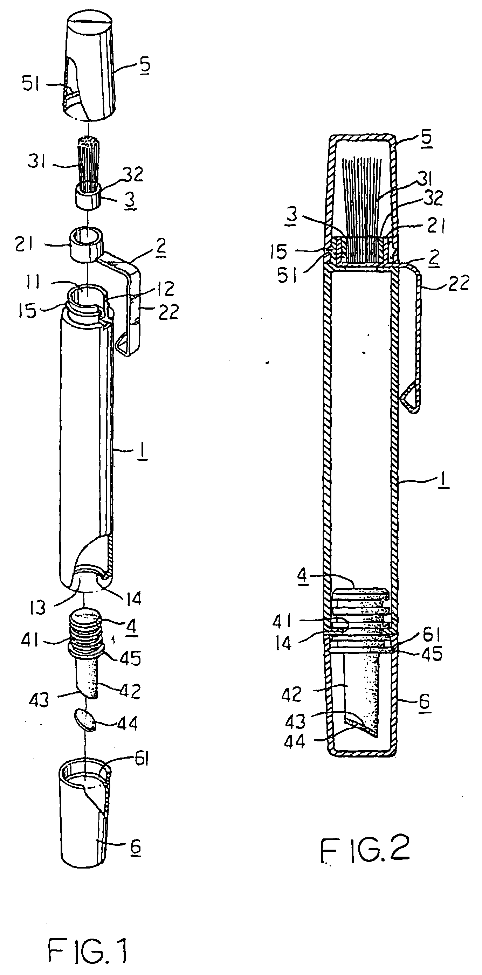

Please refer to Figs. 1 and 2 that are exploded perspective and assembled sectional views, respectively, of a static-eliminating wiper according to the present invention. As shown, the static-eliminating wiper mainly includes a conductive main body 1, a metal clip 2, and a conductive brush 3.

The main body 1 is a tubular member preferably made of metal or conductive plastic material. A first or front open end 11 of the main body 1 is provided at one side of a wall thereof with a cut 12.

The metal clip 2 includes a ring portion 21 and a clip portion 22 outward and downward extended from one side of the ring portion 21. The metal clip 2 is connected to the main body 1 by disposing the ring portion 21 in the front open end 11 of the main body 1 with an upper part of the clip portion 22 rested in the cut 12.

The conductive brush 3 includes a plurality of conductive wires 31 that are bound together at their roots with a metal fastening ring 32. The conductive brush 3 is connected to the metal clip 2 by mounting the metal fastening ring 32 into the ring portion 21 of the metal clip 2. Thereby, the conductive brush 3, the metal clip 2, and the main body 1 are sequentially and electrically connected to one another.

To use the static-eliminating wiper of the present invention, a user may hold the wiper at the main body 1 to bring the wires 31 of the conductive brush 3 into contact with an article that is to be cleaned, such as a lens, a computer screen, etc. At this point, any static electricity on the article being cleaned would be grounded via the conductive brush 3, the metal clip 2, the main body 1, and the user's body. That is, any static electricity on the article being cleaned is eliminated to prevent deposition of dust on the article.

The metal clip 2 allows a user to conveniently carry the whole conductive static-eliminating wiper by clipping the brush to a pocket on his clothing.

The main body 1 of the static-eliminating wiper is provided at a second or rear open end 13 with a rubber seat 4. The rear open end 13 is formed of a radially inward extended flange 14. The rubber seat 4 includes a first portion that is formed around an outer circumferential surface with a plurality of parallel grooves 41, anyone of which may be engaged with the flange 14 to fix the rubber seat 4 to the rear open end 13 of the main body 1, and a second portion extended in a direction opposite to the first portion to form a rod 42. A free end of the rod 42 provides a bevel surface 43 to which a cleaning element 44, such as a piece of chamois, is fixedly attached by adhesive, for example. The bevel end surface 43 and the cleaning element 44 attached thereto allow the user of the static-eliminating wiper to easily access and clean any corners on the lens, screen, etc. that are otherwise not easily accessed and, cleaned.

Moreover, the front open end 11 of the main body 1 and the rubber seat 4 are provided on their outer wall surface with a radially outward extended flange 15, 45, respectively. Alternately, such flange 15, 45 may be replaced with a circular groove. The flanges or the circular grooves 15, 45 are removably engaged with circular grooves or flanges 51, 61 correspondingly provided on inner wall of a front cap 5 and of a rear cap 6, respectively, so that the front and the rear caps 5, 6 may cover the conductive brush 3 and the cleaning element 44, respectively, to protect the same when the static-eliminating wiper is not in use.

With the above arrangements, the static-eliminating wiper of the present invention has novel and improved structure and is practical for use.

## Claims

1. A static-eliminating wiper comprising:
a conductive main body in the form of a tubular member having a first or front open end and a second or rear open end, and said first or front open end being formed at one side of a wall thereof with a cut;
a metal clip including a ring portion and a clip portion outward and downward extended from one side of said ring portion, said metal clip being connected to said conductive main body by disposing said ring portion in said first or front open end with an upper part of said clip portion rested in said cut provided on one side of said first or front open end; and
a conductive brush including a plurality of conductive wires that are bound together at their root portion with a metal fastening ring, said conductive brush being connected to said metal clip by mounting said metal fastening ring into said ring portion of said metal clip.

2. A static-eliminating wiper as claimed in claim 1, wherein said second or rear open end of said main body has a rubber seat connected thereto, said rubber seat including a rod portion extended in a direction opposite to said main body, and a free end of said rod portion being a bevel surface with a cleaning element adhered thereto to facilitate cleaning of corners on articles being wiped.

3. A static-eliminating wiper as claimed in claim 2, further comprises a front cap and a rear cap that are removably covered on said front and said rear open ends, respectively, of said main body to protect said conductive brush and said cleaning element, respectively, when said static-eliminating wiper is not in use.
